# EUROPEAN PATENT APPLICATION

(11) **EP 3 563 943 A1**
(43) Date of publication of application: **06.11.2019**
(21) Application number: 19275020.6
(22) Date of filing: 21.02.2019
(51) Int. Cl.: B21D 1/02, B21B 45/06, B21B 45/08, B24C 1/08, B24C 3/14, B24C 3/08

(54) **METHOD OF OPERATION OF A CUT-TO-LENGTH STEEL COIL PROCESSING LINE WITH SLURRY BLASTING DESCALING UNIT**

(30) Priority: 01.05.2018 US 201815968107
(71) Applicant: The Material Works, Ltd., Red Bud, IL 62278 (US)
(72) Inventor: Voges, Kevin C., Red Bud, IL Illinois 62278 (US)
(74) Representative: Tomkinson, Alexandra

(57) **Abstract**

A cut-to-length line (20) for processing coiled sheet metal (24) having a thickness of greater than .200 inches has an uncoiler (22), a descaler (30), and flattening machinery which may be a stretcher leveler (32) or a temper mill (110). The line is operated in an advancement mode by (i) the advancing the sheet metal through the line; and (ii) descaling the sheet metal in the descaler. In one aspect, when a length of sheet metal to be stretch leveled is positioned in the stretcher leveler, the line may be operated in an idle mode by: (i) stopping the advancement of the sheet metal from the uncoiler through the descaler; (ii) stopping descaling of the sheet metal in the descaler; and (iii) stretch leveling the length of the sheet metal. When stretch leveling is complete, the line may be operated in the advancement mode.

## Description

### SUMMARY

The present disclosure relates to methods for processing steel coils in a cut-to-length and/or blanking line. More in particular, the disclosure is directed to a slurry blasting descaling unit that is incorporated into a cut-to-length and/or blanking line for the processing of thick gage sheet metal in coil form. The methods in the description that follows are well suited for sheet metal having a thickness in excess of 0.200 inches, and more well suited for sheet metal having a thickness in excess of 0.500 inches. In the line, the thick gage sheet metal may be uncoiled, descaled in a slurry blasting descaling unit, flattened, cut to the required length, and stacked. The end product produced by a cut-to-length and/or blanking line is a flat sheet of material cut to a precise length tolerance. The flattening may take place via a stretcher leveler or a temper mill.

The general description of a slurry blasting descaling cell is set forth in US 7601226, US 8062095, US 8066549, US 8074331, US 8128460, US 8707529, and US 933625, the disclosures all of which are incorporated by reference herein. The general description of a stretcher leveler is set forth in US 4751838, which is incorporated herein by reference. The general description of a temper mill is set forth in US 3292402, which is incorporated herein by reference.

As described in more detail, the disclosure is directed to a processing line with an uncoiler followed by a slurry blast descaling unit followed by either a temper mill or a stretcher leveler, following by a shearer, following by a stacking apparatus. The slurry blast descaling cell may be operated intermittently and synchronized with the operation of the stretcher leveler and shearer, or the temper mill and the shearer, as applicable. Thus, the sheet metal coil may be intermittently uncoiled from the unwinder and intermittently descaled as it is advanced through the slurry blast descaling cell in a manner that matches the cycle time of the shearer and stretcher leveler, or temper mill and the shearer.

### BRIEF DESCRIPTION OF THE DRAWINGS

Figure 1 illustrates a cut-to-length processing line including an uncoiler, slurry blast descaling cell, a stretcher leveler, a shearer and stacking apparatus, and an end conveyor with detail areas 2-6 corresponding to the drawing figures.
Figure 2 is an enlarged view of detail area 2 of Figure 1 corresponding to generally an uncoiler and guide rollers that direct the uncoiled sheet metal material through the line.
Figure 3 is an enlarged view of detail area 3 of Figure 1 corresponding to generally a slurry blast descaling cell.
Figure 4 is an enlarged view of detail area 4 of Figure 1 corresponding to generally a stretcher leveler.
Figure 5 is an enlarged view of detail area 5 of Figure 1 corresponding to generally a shearer and sheet stacker.
Figure 6 is an enlarged view of detail area 6 of Figure 1 corresponding to an end conveyor.
Figure 7 illustrates motors and impeller wheels of the descaler.
Figure 8 illustrates an actuator and nozzle of the impeller wheel of the descaler..
Figure 9 illustrates a schematic diagram of slurry recirculation and delivery systems associated with the descaler.
Figure 10 illustrates a cut-to-length processing line including an uncoiler, a temper mill, a slurry blast descaling cell, a shearer, a stacking apparatus, and an end conveyor with detail areas 11-15 corresponding to the drawing figures.
Figure 11 is an enlarged view of detail area 11 of Figure 10 corresponding to generally an uncoiler and guide rollers that direct the uncoiled sheet metal material through the line.
Figure 12 is an enlarged view of detail area 12 of Figure 10 corresponding to generally a temper mill.
Figure 13 is an enlarged view of detail area 13 of Figure 10 corresponding to generally a slurry blast descaling cell.
Figure 14 is an enlarged view of detail area 14 of Figure 10 corresponding to generally a shearer and sheet stacker.
Figure 15 is an enlarged view of detail area 15 of Figure 10 corresponding to an end conveyor.

### DETAILED DESCRIPTION

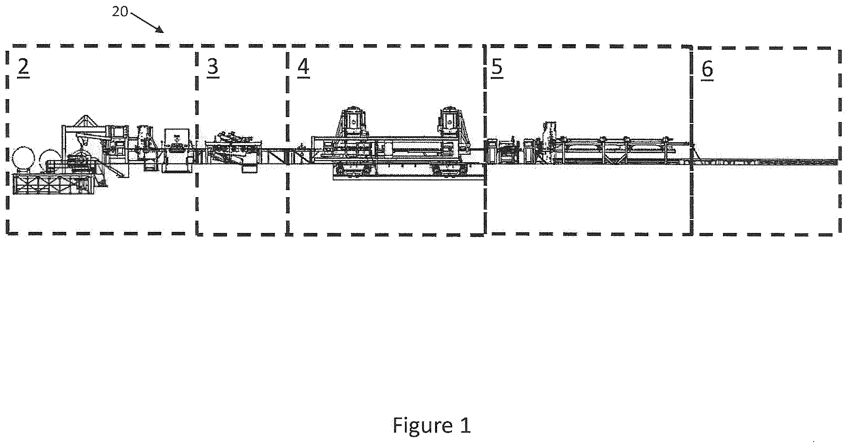

A first exemplary cut-to-length and/or blanking line 20 is shown generally in Figures 1-6, and includes an uncoiler 22 on which a coil of sheet metal 24 is mounted on a reel, a crop shearer 26, a roller leveler 28, a descaler 30, a stretcher leveler 32, shearer 34, a stacking apparatus 36, and an exit conveyor 38.

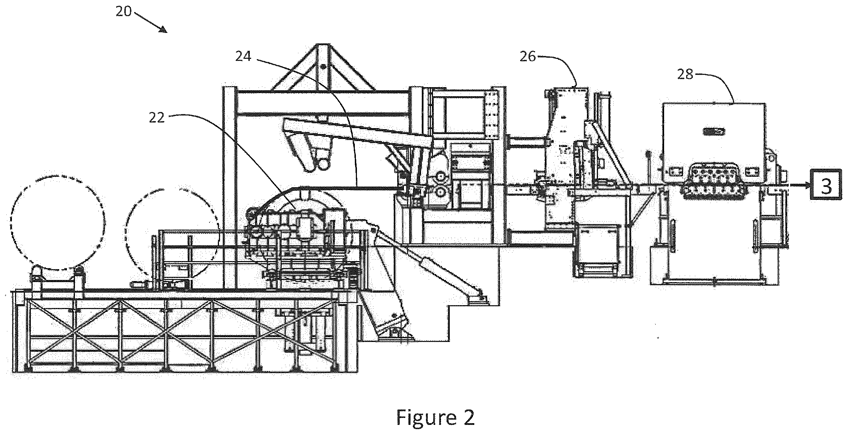

As shown best in Figure 2, the unwinder 22 includes coiling handling and threading systems and braker rolls to control coil set. The crop shearer 26 is positioned just downstream of the uncoiler 22 to remove the lead end of the coil and facilitate threading. The roller leveler 28 is positioned just downstream of the crop shearer 26. The roller leveler 28 includes a plurality of upper rollers and lower rollers that alleviate minor incoming shape issues. At least some of the rollers are powered to withdraw the sheet metal strip from the coil at a uniform velocity. The upper and lower rollers are positioned relative to one another to put a deep reverse bend in the sheet sufficient to reverse any coil set. The uncoiler 22, crop shearer 26, and roller leveler 28 are conventional.

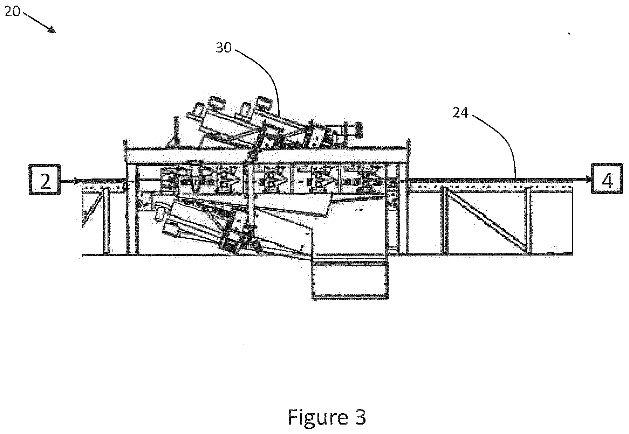

As shown best in Figure 3, after the roller leveler 28, the descaler 30 is provided. The descaler 30 may be of the type described in US 7601226, US 8062095, US 8066549, US 8074331, US 8128460, US 8707529, and US 933625. As will be described in greater detail below, the descaler may be operated to descale sheet metal as the sheet metal is advanced through the descaler, and may be operated to not descale the sheet metal when advancement of the sheet metal is intermittently stopped for stretch leveling and shearing operations. Descaling may include removing substantially all of the scale from the surface of the sheet metal, adjusting surface finish and/or providing the processed sheet metal with rust inhibitive properties and surface passivation.

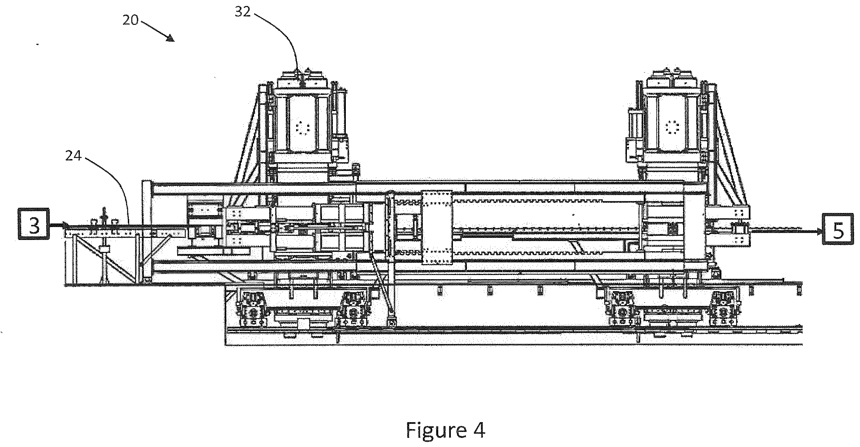

As shown in Figure 4, after the descaler 30, a stretcher level 32 is provided. The stretcher leveler may be of the type described in US 4751838. The stretcher leveler 32 may include a plurality of powered rollers for pulling the sheet metal strip through the stretcher leveler. A feeding mechanism of the stretcher 32 leveler may advance the sheet metal strip through the stretcher leveler at precisely measured increments. Between the incremental advances of the strip, the stretcher leveler 32 may clamp down on a segment of the strip that is within the stretcher leveler and stretch the segment beyond its yield point to eliminate internal residual stresses, thereby leveling that segment. After the segment has been stretched, the stretcher leveler 32 may release the strip and advance the strip so that the next segment of strip can be stretched. Generally speaking, the stretcher leveler consists of a pair of entry and exit frames that are adjustable relative to the desired length of the segment to be stretched. During stretching, each frame grips the segment to be stretched across its width. Large hydraulic cylinders extend between the two frames. When pressurized, the cylinders push the frames away from one another thereby stretching the segment clamped therebetween. The segment is subsequently stretched in the direction of travel. The feed mechanism feeds the sheet metal material through the leveler incrementally. Advancement of the sheet is stopped so as to allow an incremental portion of the sheet positioned in the stretcher leveler to be stretched.

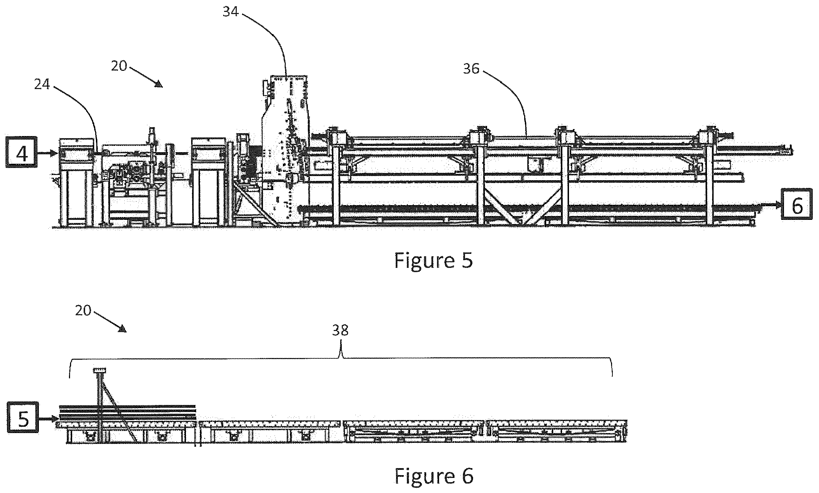

As shown in Figure 5, after the stretcher leveler 32, a shearer 34 and stacking apparatus 36 may be provided. The shearer 34 may comprise a direct drive mechanical shear. A direct drive mechanical shear has proven effective for use with thicker gage materials in a stretcher leveler cut-to-length blanking line where the sheet metal strip is incrementally fed through the line. The stacking apparatus 36 may be a drop arm stacker and may include a lift table. As shown in Figure 6, the exit conveyor 38 may be provided after the stacking apparatus 36. The shearer 34, stacking apparatus 36 and exit conveyor 38 are conventional.

The processing line may be configured to operate in an advancement mode and an idle mode. In the advancement mode, the uncoiler 22, the descaler 30, and the stretcher leveler 32 may be operated to advance the sheet metal through the line by uncoiling the coil of sheet metal 24 in the uncoiler, directing the sheet metal through the descaler and to the stretcher leveler, and advancing the portion of sheet metal stretched in the stretcher leveler toward the shearer 34 and stacking apparatus 36. In the advancement mode, the sheet metal 24 may be descaled in the descaler 30, and stretch leveled in the stretcher leveler 32. In the idle mode, the uncoiler 22, the descaler 30, and the stretcher leveler 32 may be operated to stop the advancement of the sheet metal from the uncoiler through the descaler, and to stretch the portion of the sheet metal positioned in the stretcher leveler. During the idle mode, the descaling of the sheet metal 24 in the descaler 30 may be stopped or significantly reduced. Also, during the idle mode, the desired length of the sheet metal 24 may be cut to length by operating the shearer 34 to cut to length the sheet metal advanced past the shearer. The stacking apparatus 36 may then stack the lengths of sheet metal cut to the desired length and place them on the exit conveyor 38.

Operation of the shearer 34 to cut to length the sheet metal advanced past the shearer may occur during the transition of the line from the advancement mode to the idle mode. At the end of the advancement mode, when the portion of the sheet metal 24 to be stretched in the stretcher leveler 32 is positioned in the stretcher leveler before stretching occurs but after the sheet metal is clamped in the stretcher leveler, the shearer 34 may be operated to cut to length the desired length of sheet metal. Once cut, the portion of the sheet metal positioned in the stretcher leveler 32 may then be stretched. Once stretched, the stretched portion of the sheet metal may be unclamped. The processing line may then be transitioned, switching from operation in the idle mode to operation in the advancement mode by again advancing the sheet metal 24 from the uncoiler 22 through the descaler 30 to the stretcher leveler 32, and descaling the sheet metal in the descaler. The steps of operating in the advancement mode followed by operating in the idle mode followed by operating in the advancement mode may be continued until an end of the sheet metal 24 arrives at the stretcher leveler or there is otherwise insufficient length of the sheet metal to process and advance through the line.

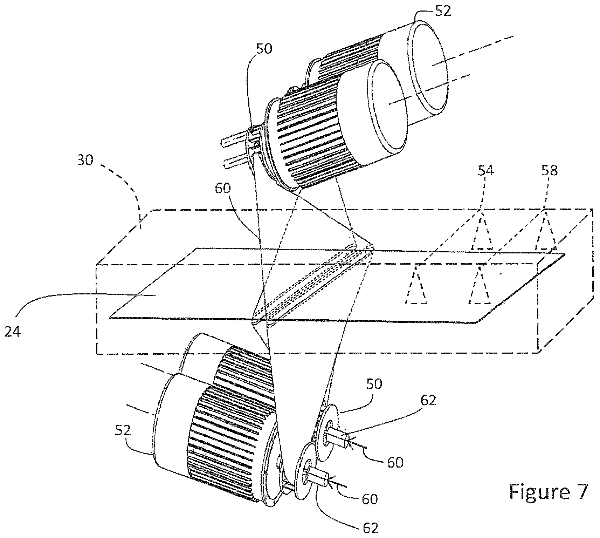

Referring to Figure 7, the descaler 30 comprises a hollow box or enclosure (shown in phantom in Figure 7), and includes at least a pair of centrifugal impeller wheels 50 each driven by a motor 52. The impeller wheel 50 and associated motor 52 may be mounted on the enclosure. The enclosure has a narrow entrance opening slot to receive the sheet metal 24 and an opposite downstream end wall slot exit opening to allow the advancing sheet metal to pass through the descaler 30 to the stretcher leveler 32. Within the enclosure toward the downstream end wall, the descaler may include rinsing nozzles 54 and/or a wash station 58. The rinse nozzles and the wash station of the descaler may be operated as needed during the advancement mode and the idle mode so as clean the surface of the sheet metal before the sheet metal is moved toward the stretcher leveler. One pair of the impeller wheels 50 may be configured to propel slurry 60 against one side of the sheet metal 24 advanced into the enclosure and another pair of the impeller wheels may be configured to propel slurry against the other side of the sheet metal advanced into the housing. The wheels 50 may be supplied with the slurry through nozzles 62. The rotating wheels 50 propel the slurry 60 from close proximity to the opposite surfaces of the length of sheet metal, and the impact of the slurry with the sheet metal removes the scale from the surfaces of the sheet metal as the length of sheet metal passes through the descaler 30. While the drawings show one descaler, the number of descalers, and/or number impeller wheels on the descaler(s), may be chosen to match the desired line speed of the sheet metal, and ensuring adequate removal of scale and subsequent adjustment of surface texture.

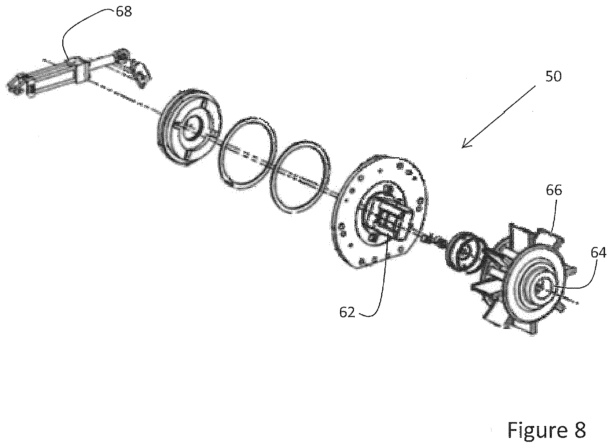

As shown in Figure 8, the impeller wheel 50 may have a center hub 64 with a plurality of vanes 66 extending radially from the hub so that rotation of the impeller wheel directs slurry radially outward from the hub along the vanes. The nozzle 62 may fit within the impeller and directs slurry from a feed tube (not shown) to the impeller. An actuator 68 may be operatively connected to the nozzle 62 and configured to allow the nozzle to be adjustably positioned within the impeller wheel 50.

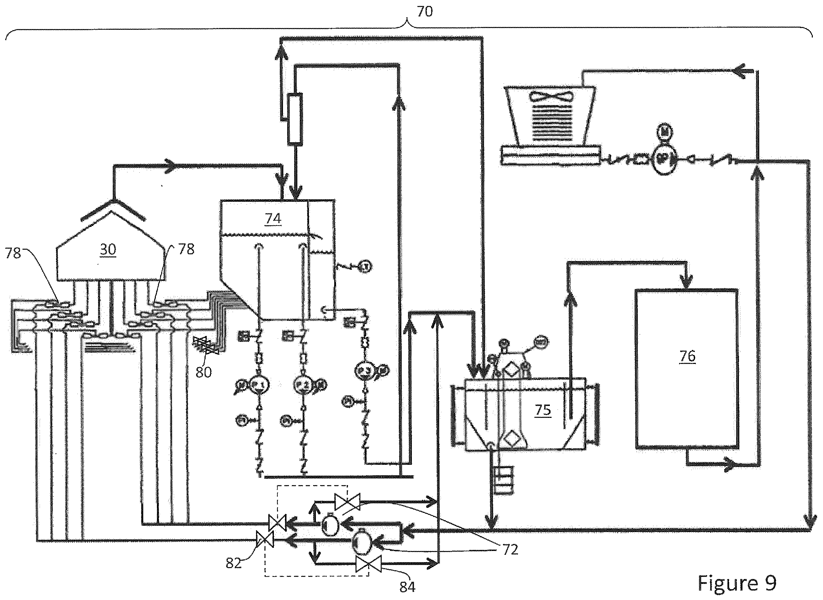

As best shown in Figure 9, the descaler 30 may have a slurry delivery and recirculation system 70 that includes pumps 72 and eductors 78 that draw and mix required concentrations of grit and liquid to form the slurry 60, and delivery the slurry to the impeller wheels 50 via the feed tube (not shown) and the nozzle 62. To deliver a desired amount of slurry 60 to the impeller wheels 50, the descaler 30 may include eductor feed pumps 72 that draw a supply of liquid from slurry settling, cleaning and supply tanks 74,75,76 to the eductors 78. Grit from the slurry settling tank 74 may pass through a grit valve 80 to a grit inlet of the eductors 78. The pressure from the eductor feed pumps 72 may mix the grit with the liquid in the eductors to form the slurry 60 in a desired concentration. As will be described below in connection with an aspect of operation in the advancement mode, the pressure supplied by the eductor feed pumps 72 may deliver the slurry 60 from the eductors 78 to a manifold having supply lines that direct slurry to the feed tube and the nozzles 62 of the impeller wheels 50 associated with the descaler. As will be described below in connection with an aspect of operation in the idle mode, the liquid exiting the eductor feed pumps 72 may also be recirculated to the slurry cleaning tank 75 and/or supply tanks 76 (or suction side of the feed pump) associated with the delivery and recirculation system 70. Valves 82,84 associated with the educator pump discharge and recirculation may be operated as necessary to direct flows as desired.

In one aspect of operating the descaler 30 in the idle mode to stop and/or reduce descaling of the sheet, the valves 80 which supply grit to the eductor may be shut so that grit is not mixed with the liquid to form the slurry for descaling. Thus, the eductor feed pumps 72 may continue to delivery liquid to eductors 80 and to the impellers 50, but because no grit is entrained in the liquid to the form the slurry, effective descaling does not occur. In the alternative or in addition to the aforementioned aspect of operation in the idle mode, all or a majority the discharge of the eductor feed pumps 72 may be recirculated to any one or more of the slurry settling, cleaning, or supply tanks 74,75,76 (or the suction side of the eductor feed pump) rather than being directed to the eductors, thereby decreasing pressure supplied to the eductors 80 and decreasing drawing and mixing of grit with liquid to form the slurry and delivery slurry to the nozzles 62 of the impellers 50. Thus, the eductor feed pumps 72 may continue to operate at rated speed but because at least a majority of the liquid is recirculated rather than delivered to the eductors, the supply of slurry to the manifold and the impellers is effectively suspended and effective descaling does not occur. In the alternative or in addition to the aforementioned aspect of operation in the idle mode, the nozzle 62 may be selectively adjusted to decrease the blast pattern to a level where descaling of the sheet does not occur. For instance, in the advancement mode for descaling of the sheet metal, the nozzle 62 may be rotated with the actuator 68 into position to provide slurry to the vanes 66 of the impeller in a manner that provides an effective amount of the slurry to the impeller and allows the impeller to propel the slurry against the sheet metal for descaling. In the idle mode when descaling of the sheet metal is stopped or reduced, the nozzle 62 may be rotated by the actuator 68 into position so as to disrupt the supply of the slurry to the vanes of the impeller. Thus, in the idle mode, the impeller wheels 50 may be continue to rotate, for instance, at rated speed or a reduced speed, but because the nozzle 62 has been positioned to disrupt the delivery of an effective supply of slurry to the wheels (e.g., an insufficient supply or no supply), descaling or a desired amount of descaling does not occur. Once the advancement mode resumes, the nozzle 62 may be rotated to supply the slurry to the impeller wheel and allow the impeller to propel the slurry against the sheet with a desired intensity of the blast pattern for descaling.

In addition or in the alternative to aforementioned aspects of operating the descaler in the idle mode, the impeller wheels 50 may be adjustably positioned toward and away from the surface of the sheet metal passing through the descaler. The impeller wheels 50 and their respective driving motors 52 may be adjustably positioned about axes that are perpendicular to the axes of rotation of the impellers to adjust the angle and/or the distance of the slurry 60 impact with the surface of the sheet metal 24. Thus, the impeller wheels 50 may be adjustable to vary the angle of the slurry blast projected toward the surface of the strip from directly down at the strip surface to an obtuse angle, thereby effectively stopping or reducing descaling of the strip.

In addition or in the alternative to the aforementioned aspects of operating the descaler 30 in the idle mode, the motors 52 associated with the impeller wheels 50 may be operated in a manner to vary the rotation of the impel wheels to effectively stop or reduce descaling of the sheet metal. For instance, hydraulic motors may be used to drive the impeller wheels 50, and the source of hydraulic fluid for driving the motors may be recirculated to effectively idle the motors during the idle mode. As another example, the motors 52 may comprise electric motors and the electric motors may have variable frequency drives, thus allowing for changing of the speed of the motors without start and restart of the motors. In the advancement mode, the impeller wheels 50 may rotate to generate a slurry discharge velocity in a range of about 100 feet per second to 200 feet per second (or more preferably, in a range of about 130 feet per second to 150 feet per second). In the idle mode, the impeller wheels may rotate to generate a slurry discharge velocity below 100 feet per second.

A cut-to-length processing line with the stretcher leveler 32 tends to produce flat, continuous lengths of sheet metal 24 that have no residual stresses and tend to maintain shape over time. Stretcher leveling operations generally have minimal effect on the physical and mechanical properties of the continuous length of sheet metal.

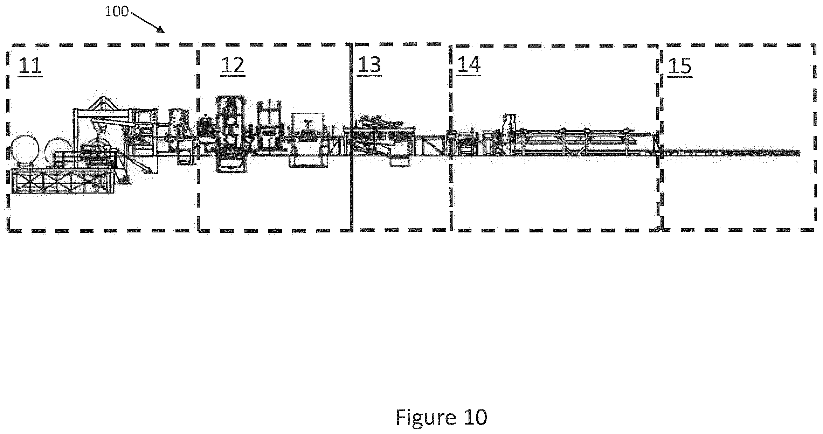

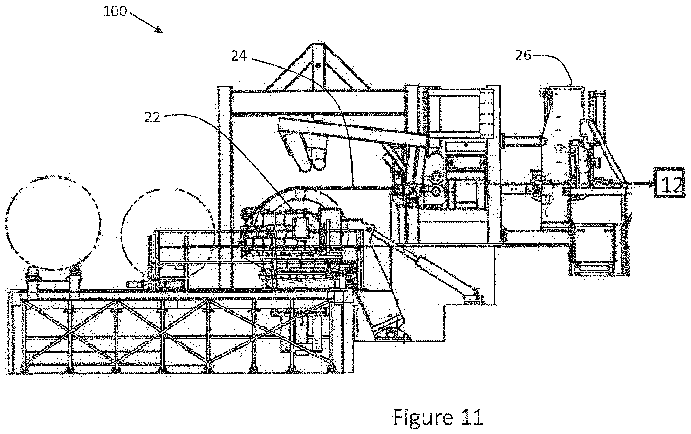

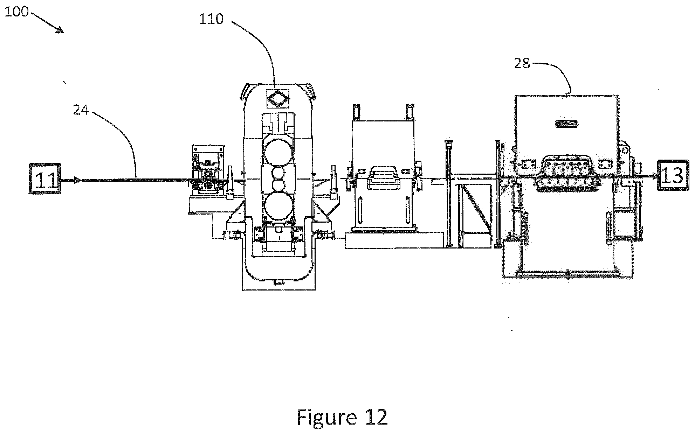

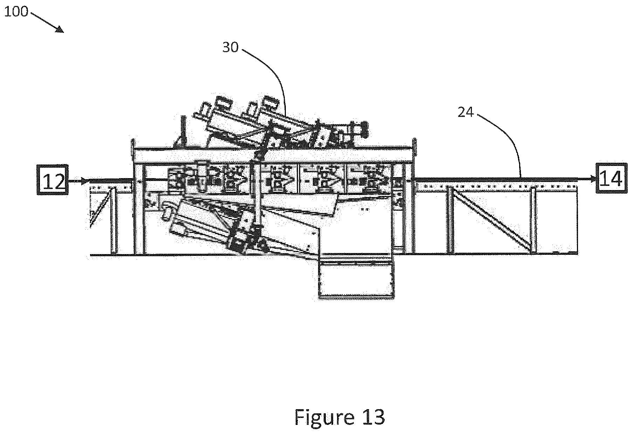

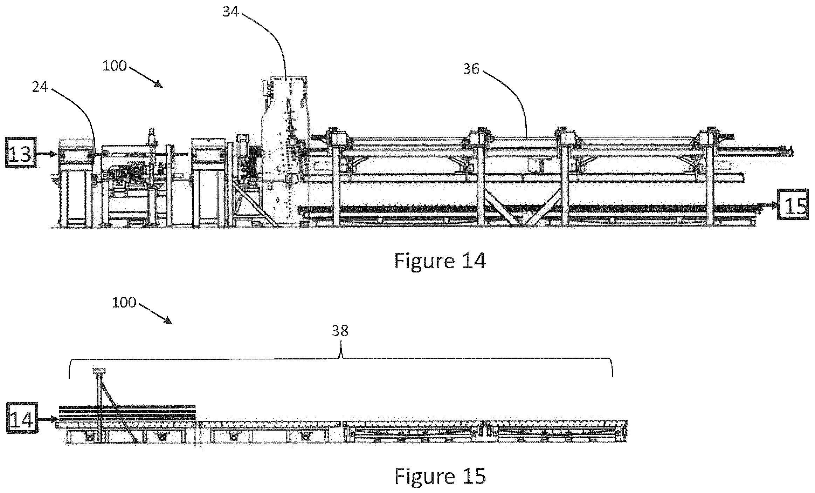

A second exemplary cut-to-length and/or blanking line 100 is shown generally in Figures 10-15, and includes much of the same equipment described previously. For convenience, the equipment will be indicated with like reference characters. The line includes the uncoiler 22 on which the coil of sheet metal 24 is mounted on a reel followed by the crop shearer 26 followed by a heavy gage temper mill 110. The temper mill be of the type described in US 3292402. Therafter, the line 100 may include a roller leveler 28, the shearer 34, the stacking apparatus 36, and the exit conveyor 38. The descaler 30 may arranged after the temper 110 or after the roller leveler. The drawings show the descaler 30 following the roller leveler 28. In either case, the descaler 30 is positioned on the line 100 following the heavy gage temper mill 110.

In a manner similar to that described above, the processing line 100 may be operated in the advancement mode and the idle mode. Using one or more of the aforementioned methods, the descaler 30 may be operated in the advancement mode and idle mode to descale the sheet metal 24 as it is advanced and to stop descaling temporarily for the shearer 36 to cut the sheet metal to desired length. The heavy gauge temper mill 100 may be operated to flatten the sheet metal in the advancement mode and to temporarily stop flattening in the idle mode to allow for the shearer to cut the sheet metal to the desired length. For instance, in the advancement mode, a desired length of the sheet metal 24 may be unwound from the unwinder 22, advanced through the descaler 30 and descaled, advanced through the heavy gauge temper mill 100 and flattened, and passed through the shearer 36. Then, the line may be transitioned from the advancement mode to the idle mode to allow the shearing operation to occur. Once the shearing operation is complete, the line may be transitioned from the idle mode to the advancement mode with uncoiling the sheet metal from the unwinder 22, descaling the sheet in the descaler 30, flattening the sheet in the heavy gauge temper mill 100 and passing the desired length through the shearer 36. The line may be operated alternating between the advancement mode and the idle mode until there is an insufficient desired length of the sheet to passed through the shearer 36. If the shearer 36 is a rotary shear rather than a direct drive shear, the time during which the line 100 is in the idle mode may be reduced.

In both line configurations 20,100 described above, the line may be placed in the idle mode when a coil runs out and a new one is threaded through the line. The line may be in the idle mode until the head of the new coil enters the descaler 30. The line may be transitioned to the advancement mode.

As shown in In view of the foregoing, it will be seen that the several advantages of the invention are achieved and attained. The embodiments were chosen and described in order to best explain the principles of the disclosure and their practical application to thereby enable others skilled in the art to best utilize the principles in various embodiments and with various modifications as are suited to the particular use contemplated. As various modifications could be made in the constructions and methods herein described and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above-described exemplary embodiments, but should be defined only in accordance with the following claims appended hereto and their equivalents.

## Claims

1. In a cut-to-length steel coil processing line having an uncoiler followed by descaler followed by a stretcher leveler followed by a shearer followed by a stacking apparatus, all arranged to sequentially process a continuous length of sheet metal having a thickness of greater than .200 inches, a method comprising:
operating the uncoiler, the descaler, and the stretcher leveler in an advancement mode by (i) the advancing the sheet metal from the uncoiler through the descaler to the stretcher leveler; and (ii) descaling the sheet metal in the descaler;
when a length of sheet metal to be stretch leveled is positioned in the stretcher leveler, operating the uncoiler, the descaler, and the stretcher leveler in an idle mode by: (i) stopping the advancement of the sheet metal from the uncoiler through the descaler; (ii) at least reducing descaling of the sheet metal in the descaler; and (iii) stretch leveling the length of the sheet metal with the stretch leveler; and
when stretch leveling the length of the sheet metal with the stretch leveler is complete, operating the uncoiler, the descaler, and the stretcher leveler in the advancement mode.

2. The method of claim 1 wherein the steps of operating in the advancement mode followed by operating in the idle mode followed by operating in the advancement mode is continued until an end of the sheet metal arrives at the stretcher leveler.

3. The method of claim 1 wherein the descaler has first and second wheels configured to a receive scale removing media from a supply of scale removing media.

4. The method of claim 3 wherein the step of operating in the advancement mode comprises:
supplying the supply of the scale removing media to the first and second wheels; and
rotating the first wheel and the second wheel in a manner to propel the scale removing media from the first wheel and second wheel against the at least one surface of the sheet metal to descale the at least one surface of the sheet metal.

5. The method of claim 3 wherein the step of operating in the idle mode comprises one of:
a) reducing rotation of the first wheel and the second wheel in a manner to reduce an amount of scale removing media being propelled from the first wheel and the second wheel so as to at least reduce the descaling of the at least one surface of the sheet metal;
b) stopping rotation of the first wheel and the second wheel in a manner so as to at least reduce the descaling of the at least one surface of the sheet metal;
c) reducing a supply of the scale removing media to the first and second wheels in a manner so as to at least reduce the descaling of the at least one surface of the sheet metal; or
d) stopping a supply of the scale removing media to the first and second wheels.

6. The method of claim 3 wherein the first and second wheels are driven by motors with variable frequency drives.

7. The method of claim 1 wherein the advancement mode further comprises rinsing the sheet metal in the descaler to remove scale removing media prior the sheet metal advancing from the descaler to the stretcher leveler.

8. The method of claim 1 further comprising:
determining a desired length of sheet metal to be cut to length;
when the desired length of sheet metal to be cut to length extends past the shearer, operating the uncoiler, the descaler, and the stretcher leveler in the idle mode; and
when the sheet metal is cut to the desired length, operating the uncoiler, the descaler, and the stretcher leveler in the advancement mode.

9. In a cut-to-length steel coil processing line having an uncoiler followed by a temper mill followed by descaler cell followed by a shearer followed by a stacking apparatus, all arranged to sequentially process a continuous length of sheet metal having a thickness of greater than .200 inches, a method comprising:
operating the uncoiler, the temper mill, and the descaler in an advancement mode by (i) the advancing the sheet metal from the uncoiler through the temper mill to the descaler; and (ii) descaling the sheet metal in the descaler;
when a desired length of sheet metal to be cut to length extends past the shearer, operating the uncoiler, the temper mill, and the descaler in an idle mode by: (i) stopping the advancement of the sheet metal from the uncoiler through the temper mill and through the descaler; (ii) at least reducing descaling of the sheet metal in the descaler; and (iii) cutting the sheet metal to the length with the shearer; and
when the sheet metal is cut to the length, operating the uncoiler, the temper mill, and the descaler in the advancement mode.

10. The method of claim 9 wherein the descaler has first and second wheels configured to receive scale removing media from a supply of scale removing media.

11. The method of claim 10 wherein the step of operating in the advancement mode comprises:
supplying the supply of scale removing media to the first and second wheels;
rotating the first wheel and the second wheel in a manner to propel the scale removing media from the first wheel and second wheel against the at least one surface of the sheet metal to descale the at least one surface of the sheet metal.

12. The method of claim 10 wherein the step of operating in the idle mode comprises one of:
a) reducing rotation of the first wheel and the second wheel in a manner to reduce an amount of the scale removing media being propelled from the first wheel and the second wheel so as to at least reduce the descaling of the at least one surface of the sheet metal;
b) stopping rotation of the first wheel and the second wheel in a manner so as to at least reduce the descaling of the at least one surface of the sheet metal;
c) reducing a supply of the scale removing media to the first and second wheels in a manner so as to at least reduce the descaling of the at least one surface of the sheet metal; or
d) stopping a supply of the scale removing media to the first and second wheels.

13. The method of claim 10 wherein the first and second wheels are driven by motors with variable frequency drives.

14. The method of claim 9 wherein the advancement mode further comprises rinsing the sheet metal in the descaler to remove scale removing media prior the sheet metal advancing from the descaler to the temper mill.
